# EUROPÄISCHE PATENTSCHRIFT

(11) **EP 3 103 960 B1**
(45) Veröffentlichungstag und Bekanntmachung des Hinweises auf die Patenterteilung: **28.07.2021**
(21) Anmeldenummer: 16173190.6
(22) Anmeldetag: 06.06.2016
(51) Int. Cl.: F01C 21/10, F04C 14/18, F04C 14/22, F04C 14/24

(54) **PUMPE MIT VERSTELLEINRICHTUNG UND STEUERVENTIL ZUR VERSTELLUNG DES FÖRDERVOLUMENS DER PUMPE**
PUMP WITH ADJUSTING DEVICE AND CONTROL VALVE FOR ADJUSTING THE DISPLACEMENT OF THE PUMP
POMPE COMPRENANT UN DISPOSITIF DE RÉGLAGE ET SOUPAPE DE COMMANDE DESTINÉE À RÉGLER LE DÉBIT DE LA POMPE

(30) Priorität: 10.06.2015 DE 102015109156
(43) Veröffentlichungstag der Anmeldung: 14.12.2016
(73) Patentinhaber: Schwäbische Hüttenwerke Automotive GmbH, 73433 Aalen-Wasseralfingen (DE)
(72) Erfinder: Meinig, Uwe, 88348 Bad Saulgau (DE)
(74) Vertreter: SSM Sandmair

(56) Entgegenhaltungen:
- EP-A1- 2 754 896
- EP-A2- 2 743 506
- WO-A1-2008/037070
- US-A1- 2013 121 867
- US-A1- 2013 209 302
- US-A1- 2015 044 083
- None

## Beschreibung

Die Erfindung betrifft eine Pumpe mit einer Verstelleinrichtung und einem Steuerventil zur Verstellung des Fördervolumens der Pumpe. Im Besonderen betrifft die Erfindung eine Pumpe, die eine Verstelleinrichtung zur Verstellung des spezifischen Fördervolumens der Pumpe umfasst. Das Steuerventil ist mit der Verstelleinrichtung fluidisch verbunden, um durch Beaufschlagung der Verstelleinrichtung mit einem unter Druck stehenden Stellfluid das Fördervolumen der Pumpe verstellen zu können. Die Pumpe kann insbesondere dazu dienen, ein Aggregat eines Fahrzeugs, wie etwa eines Kraftfahrzeugs, mit Schmieröl, einem Arbeitsfluid oder einem Kühlfluid zu versorgen. Die Pumpe ist zweckmäßigerweise eine Verdrängerpumpe, kann grundsätzlich aber auch als Strömungsmaschine ausgeführt sein. In bevorzugten Anwendungen dient die Pumpe als Schmierölpumpe zur Versorgung eines Verbrennungsmotors eines Fahrzeugs mit Schmieröl, ist also eine Motorschmierölpumpe.

Bei Motorschmierölpumpen entspricht es einer üblichen Bauart, dass ein der Beeinflussung des Fördervolumens dienendes Verstellorgan, wie etwa ein schwenkbarer Stellring, mit dem von der Pumpe geförderten Öl, d. h. dem Öl von der Hochdruckseite des von der Pumpe versorgten Ölkreislaufs, beaufschlagt wird. Auf diese Weise wird der Fördervolumenstrom bei Erreichen einer bestimmten Druckschwelle begrenzt. In Abhängigkeit von den motorischen Randbedingungen, wie etwa Motordrehzahl, Motortemperatur, Notwendigkeit einer Kolbenkühlung und dergleichen mehr, kommt oftmals eine Verstellung des Fördervolumens, bevorzugt des spezifischen Fördervolumens, in Form von zwei oder gegebenenfalls auch mehr Druckstufen zum Einsatz. Alternativ oder ergänzend kann dabei eine Regelung der Pumpe in Abhängigkeit von einem Motorkennfeld, d. h. eine Kennfeldregelung, verwirklicht sein. Die Druckbeaufschlagung des Verstellorgans kann in einfachen Fällen direkt über ein von der Motorsteuerung angesteuertes Mehrwegeventil erfolgen. Kann das Mehrwegeventil nicht in einem Gehäuse der Pumpe oder nahe genug bei der Pumpe angeordnet werden und/oder kann eine für eine schnelle Verstellung ausreichende Dimensionierung der Strömungsquerschnitte im Ventil oder auf dem Weg zum oder vom Ventil aus konstruktiven Gründen nicht umgesetzt werden, kann ein Vorsteuerventil vorgesehen werden, das die Druckbeaufschlagung oder Druckentlastung des üblicherweise gegen die Kraft einer Feder beweglichen Verstellorgans steuert. Über das elektromagnetisch angesteuerte Mehrwegeventil wird in derartigen Ausführungen ein Druck moduliert, der auf eine Teilfläche eines typischerweise als Stufenkolben ausgebildeten Vorsteuerkolbens des Vorsteuerventils wirkt.

Eine Pumpe mit einem Vorsteuerventil und zusätzlich einem elektromagnetischen Mehrwegeventil ist jeweils aus der DE 36 30 792 A1, US 2005/0142006 A1, US 5 876 185 A und WO 2008/037070 A1 bekannt. Das Vorsteuerventil verbindet eine das Verstellorgan der jeweiligen Pumpe umfassende Verstelleinrichtung wahlweise mit entweder der Hochdruckseite des jeweiligen Pumpenkreislaufs oder einem Reservoir für das von der Pumpe geförderte Fluid oder trennt die Verstelleinrichtung sowohl von der Hochdruckseite als auch vom Reservoir. Um die Verstelleinrichtung über das Vorsteuerventil mit dem Reservoir zu verbinden und dadurch auf Umgebungsdruck, d. h. überdruckfrei, zu schalten, wird das Druckfluid über das Vorsteuerventil entweder direkt in die Umgebung abgeführt und strömt frei aufgrund Schwerkraft in das entsprechend tief gelegene Reservoir oder muss über eine eigens vorzusehende Rückführleitung zum Reservoir geführt werden. Beim freien Abströmen werden in der Umgebung des Vorsteuerventils befindliche Komponenten, beispielsweise eines Fahrzeugmotors, verschmutzt. Auch das abströmende Fluid wird zusätzlich verschmutzt. Im anderen Fall führt die zusätzlich vorgesehene Rückführleitung zu einer Erhöhung der Kosten. In beiden Fällen wird verschäumtes Fluid in das Reservoir eingeleitet und Energie nutzlos abgeführt.

Die US2015/0044083 A1 Pumpe mit verstellbarem Fördervolumen mit einem Stellglied und einem Stellventil zum Beaufschlagen des Stellglieds mit einem Stelldruck. Das Stellventil hat einen Einlass für ein Stellfluid, der mit einer Druckseite der Pumpe verbunden, ist, einen ersten Auslass für das Stellfluid in eine Stellkammer des Stellglieds, einen zweiten Einlass für das Stellfluid der mit der Druckseite der Pumpe über eine Drosselblende verbunden ist, und einem zweiten Auslass, der mit einer Stellkammer zum Verstellen des Stellglieds verbunden ist. Die US 2013/0209302 A1 betrifft eine Ölpumpe mit verstellbarem Fördervolumen mit einem Stellglied und einem Regelventil. Das Regelventil hat zwei Einlässe, die mit einer Druckseite der Pumpe verbunden sind und einen ersten Auslass, der mit einer Stellkammer zum Verstellen des Stellglieds verbunden ist und einen zweiten auslass, der mit einem Reservoir verbunden ist, aus dem die Pumpe auf der Niederruckseite Öl ansaugt. Die WO 2008/037070 A1 beschreibt ein Regelsystem zum Regeln eines Druckes an einer Druckseite einer Pumpe mithilfe eines Regeventils. Die Pumpe saugt das zu pumpende Fluid ausschließlich aus einem Reservoir an.

Es ist eine Aufgabe der Erfindung, eine im Fördervolumen mittels Verstelleinrichtung und Steuerventil verstellbare Pumpe bereitzustellen, die in Bezug auf die Druckentlastung der Verstelleinrichtung verbessert ist. Ein Stellfluid, das zur Druckentlastung der Verstelleinrichtung das Steuerventil durchströmt, soll energieeffizient, sauber und kostengünstig abgeleitet werden.

Die Erfindung geht von einer Pumpe mit verstellbarem Fördervolumen aus, die ein Pumpengehäuse mit einer Förderkammer, ein in der Förderkammer bewegliches Förderglied, eine Verstelleinrichtung zur Verstellung des Fördervolumens der Pumpe, ein Steuerventil zur gesteuerten Beaufschlagung der Verstelleinrichtung mit einem Steuerfluid und eine Zusatzsteuereinrichtung zur Beeinflussung des Steuerventils umfasst. Die Förderkammer weist auf einer Niederdruckseite einen Förderkammereinlass und auf einer Hochdruckseite einen Förderkammerauslass für ein mittels des Förderglieds zu förderndes Fluid auf. Das Pumpengehäuse umfasst einen Pumpenanschluss zur Verbindung der Pumpe mit einem Reservoir für das Fluid und einen vom Fluid auf der Niederdruckseite der Pumpe durchströmbaren Saugbereich. Der Saugbereich erstreckt sich vom Pumpenanschluss bis wenigstens zu einem Einlass der Förderkammer. Findet der Übergang vom niederen Druck auf den höheren Druck innerhalb der Förderkammer statt, wie dies insbesondere bei Rotationspumpen der Fall ist, erstreckt sich der Saugbereich bis in die Förderkammer, endet aber auf der Niederdruckseite der Förderkammer.

Ist die Pumpe in einem Pumpenkreislauf angeordnet, erstreckt sich die Niederdruckseite der Pumpe von einem Reservoir, aus dem die Pumpe das Fluid ansaugt, über den Pumpenanschluss bis wenigstens zum Förderkammereinlass. Findet der Übergang von Niederdruck auf Hochdruck in der Förderkammer statt, umfasst die Niederdruckseite der Pumpe auch die Niederdruckseite der Förderkammer, erstreckt sich also auf der Niederdruckseite bis in die Förderkammer. Die Hochdruckseite der Pumpe umfasst den im Pumpengehäuse erstreckten Hochdruckbereich und erstreckt sich ferner bis wenigstens zu dem mit dem Fluid zu versorgenden Aggregat oder, falls die Pumpe mehrere Aggregate mit dem Fluid versorgt, bis zu jedem dieser Aggregate. Im Unterschied zu den Begriffen "Niederdruckseite" und "Hochdruckseite" bezeichnet der Begriff "Saugbereich" einen auf der Niederdruckseite der Pumpe nur innerhalb des Pumpengehäuses erstreckten Strömungsbereich. Andererseits ist der Begriff "Saugbereich" nicht so auszulegen, dass die erfindungsgemäße Pumpe das Fluid aus dem Reservoir gegen die Schwerkraft ansaugen muss. Die Pumpe kann in ihrem Förderkreis auch an einer Stelle angeordnet sein, die tiefer als das Reservoir liegt, so dass die Pumpe das Fluid mit Unterstützung der Schwerkraft ansaugt. Die Pumpe kann auch vorgeladen werden, d. h. der Pumpe kann eine Vorladepumpe vorgeschaltet sein.

Das Steuerventil umfasst einen Druckanschluss für ein vom Fluid der Hochdruckseite der Pumpe abgezweigtes Stellfluid, einen mit der Verstelleinrichtung verbundenen Arbeitsanschluss für das Stellfluid und einen Entlastungsanschluss für das Stellfluid. Das Steuerventil umfasst ferner einen Steuerkolben, der in einem Ventilraum des Steuerventils zwischen einer ersten Kolbenposition und einer zweiten Kolbenposition hin und her beweglich ist, und eine Spanneinrichtung zur Erzeugung einer auf den Steuerkolben in Richtung auf eine der Kolbenpositionen wirkenden Spannkraft. Die Spanneinrichtung kann eine oder mehrere Federn zur Erzeugung der Spannkraft aufweisen. Die Spanneinrichtung kann insbesondere von einer im Ventilraum angeordneten, auf Druck beanspruchten Schraubenfeder gebildet werden.

Die Zusatzsteuereinrichtung dient der Erzeugung einer Steuerkraft, die auf den Steuerkolben des Steuerventils und der Spannkraft der Spanneinrichtung entgegenwirkt. Die Zusatzsteuereinrichtung kann zur Erzeugung der Steuerkraft eine vom Steuerkolben an einer Stirnseite geschlossene Steuerkammer mit einem Einlass für ein Steuerfluid zur Erzeugung eines auf den Steuerkolben der Spannkraft entgegenwirkenden Steuerfluiddrucks umfassen. Das Steuerfluid kann von der Hochdruckseite der Pumpe abgezweigtes Fluid sein, kann grundsätzlich aber auch ein anderes Fluid sein und/oder anders unter Druck gesetzt werden, beispielsweise mittels einer anderen Pumpe. Anstatt die Steuerkraft mittels eines Steuerfluids zu erzeugen oder zusätzlich zu einer fluidischen Steuerkraft, kann die Steuerkraft aber auch eine elektromagnetisch erzeugte Kraft sein oder solch eine Kraftkomponente umfassen. Die Zusatzsteuereinrichtung umfasst in derartigen Ausführungen eine elektrische Spule und einen relativ zur Spule hin und her beweglichen Anker, welcher der Spannkraft der Spanneinrichtung entgegen auf den Steuerkolben wirkt. In bevorzugten Ausführungen wird die Steuerkraft jedoch fluidisch mittels eines Steuerfluids erzeugt.

Der Ventilkolben und die Ventilanschlüsse sind so angeordnet, dass der Arbeitsanschluss mit dem Druckanschluss verbunden ist, wenn der Steuerkolben die erste Kolbenposition einnimmt, und der Arbeitsanschluss vom Druckanschluss getrennt und mit dem Entlastungsanschluss verbunden ist, wenn der Steuerkolben die zweite Kolbenposition einnimmt. Das Steuerventil kann ferner so eingerichtet sein, dass der Steuerkolben eine dritte Kolbenposition einnehmen kann und der Arbeitsanschluss sowohl vom Druckanschluss als auch vom Entlastungsanschluss getrennt ist, wenn der Steuerkolben die dritte Kolbenposition einnimmt. Die dritte Kolbenposition kann insbesondere eine Zwischenposition sein, die der Steuerkolben in Bewegungsrichtung zwischen der ersten und der zweiten Kolbenposition einnehmen kann. Grundsätzlich kann aber auch die erste Kolbenposition oder stattdessen die zweite Kolbenposition von den optional drei unterschiedlichen Kolbenpositionen die Zwischenposition sein. Es sind auch Ausführungen möglich, in denen das Steuerventil den Arbeitsanschluss in keiner Kolbenposition vollständig sowohl vom Druckanschluss als auch vom Entlastungsanschluss trennt, sondern den Arbeitsanschluss entweder nur vom Druckanschluss trennt, aber einen vergleichsweise geringen Fluss zwischen Arbeitsanschluss und Entlastungsanschluss zulässt, oder aber den Arbeitsanschluss vom Entlastungsanschluss trennt und gleichzeitig einen vergleichsweise geringen Fluss zwischen dem Arbeitsanschluss und dem Druckanschluss zulässt.

Ist das Steuerventil außerhalb des Saugbereichs des Pumpengehäuses angeordnet, kann das Fluid widerstandsarm durch den Saugbereich strömen, da die Strömung im Saugbereich nicht durch das Steuerventil behindert wird. In bevorzugten Ausführungen ist das Steuerventil nicht nur außerhalb des Saugbereichs, sondern außerhalb der Hauptströmung durch das Pumpengehäuse angeordnet. In den bevorzugten Ausführungen behindert das Steuerventil daher auch nicht das Abströmen des Fluids auf der Hochdruckseite des Pumpengehäuses.

Ist die Pumpe in einem Fluidförderkreis angeordnet, ist das Steuerventil in bevorzugten Ausführungen außerhalb der Hauptströmung des Förderkreises in einem Nebenstromzweig angeordnet. Das Steuerventil kann somit frei von der Forderung nach einer widerstandsarmen Hauptströmung gestaltet werden. Das Steuerventil kann entsprechend klein dimensioniert sein und gezielt auf die Erfüllung seiner Funktion, der Steuerung des Stellfluids für die Verstelleinrichtung, optimiert werden. Die Hauptströmung des Förderkreises reicht auf der Niederdruckseite der Pumpe vom Reservoir bis in das Pumpengehäuse und umfasst den Saugbereich des Pumpengehäuses. Auf der Hochdruckseite umfasst die Hauptströmung den Hochdruckbereich des Pumpengehäuses, den das Fluid von der Förderkammer bis einschließlich zu einem Auslass des Pumpengehäuses durchströmt, und den sich anschließenden Hochdruckbereich außerhalb des Pumpengehäuses bis wenigstens zu einem von der Pumpe mit dem Fluid zu versorgenden Aggregat. Versorgt die Pumpe mehrere Aggregate, wird als die Hauptströmung die Strömung zu dem Aggregat verstanden, das den höchsten Volumenbedarf, gemessen als Durchflussrate, hat oder mit dem höchsten Druck versorgt werden muss.

Nach der Erfindung ist der Entlastungsanschluss unter Umgehung des Reservoirs mit dem Saugbereich der Pumpe verbunden. Durch den Entlastungsanschluss vom Steuerventil abströmendes Stellfluid wird in einem Entlastungskanal stromab des Reservoirs in den Fluidförderkreis der Pumpe zurückgeführt. Das durch den Entlastungsanschluss vom Steuerventil abströmende Stellfluid kann an einer Verbindungsstelle zwischen dem Reservoir und dem Pumpengehäuse in den Hauptstrom zurückgeführt werden, wobei solch eine Verbindungsstelle dem Pumpengehäuse bevorzugt näher als dem Reservoir ist. Der Entlastungskanal erstreckt sich vom Entlastungsanschluss bis zur Verbindungsstelle mit dem Hauptstrom. Das Steuerventil steht nach der Erfindung über den Entlastungsanschluss nicht in Fluidverbindung mit dem Reservoir. Über den Entlastungsanschluss strömt vom Reservoir kein Fluid in den Ventilraum des Steuerventils, und insbesondere strömt vom Steuerventil kein Fluid über den Entlastungsanschluss zum Reservoir.

In bevorzugten Ausführungen wird das Stellfluid direkt in den Saugbereich des Pumpengehäuses zurückgeführt. Der Entlastungskanal mündet in solchen Ausführungen in den Saugbereich, ist also direkt an den Saugbereich angeschlossen. Die Mündung in den Saugbereich bildet die genannte Verbindungsstelle.

Durch die Rückführung des abgesteuerten Stellfluids direkt in den Saugbereich des Pumpengehäuses oder zumindest zu einer Verbindungsstelle, die stromaufwärts vom Pumpenanschluss der Niederdruckseite, aber stromabwärts vom Reservoir gebildet ist, wird einer unerwünschten Verschäumung entgegengewirkt, die bei Rückführung in das Reservoir üblicherweise auftritt. Die zum Antreiben der Pumpe erforderliche Energie wird gesenkt, da das zurückgeführte Stellfluid noch immer einen höheren Druck als das im Reservoir befindliche Fluid hat. Insbesondere in Ausführungen, in denen das Stellfluid direkt in den Saugbereich des Pumpengehäuses zurückgeführt wird, findet auf der Niederdruckseite der Pumpe eine gewisse Vorladung statt. Ist das Fluid wie bevorzugt eine Flüssigkeit, wie etwa ein Schmieröl oder ein Hydrauliköl, kann der Kavitation entgegengewirkt werden. Würde das Stellfluid durch den Entlastungsanschluss unmittelbar in die Umgebung abgegeben, würde das zum Reservoir zurückströmende Stellfluid zusätzlich verschmutzt werden. Ferner bestünde die Gefahr, dass über den Entlastungsanschluss aus der Umgebung Luft in das Steuerventil gesaugt wird, die über Leckagen zum Arbeitsanschluss und von dort in den das Pumpengehäuse durchströmenden Hauptstrom gelangt. Diese beiden Nachteile werden durch die Erfindung ebenfalls eliminiert. Ein weiterer positiver Effekt ist die Abschottung des Steuerventils vom Reservoir. Wird die Pumpe als Schmierölpumpe oder Arbeitsölpumpe eingesetzt, kommt es im Bereich des Reservoirs typischerweise zu einer Luft- und Ölzirkulation, was auf das Steuerventil zurückwirken kann. Auch dies wird durch die Erfindung verhindert. Sind das Steuerventil im oder am Pumpengehäuse angeordnet und der Entlastungskanal vom Steuerventil bis in den Saugbereich durch das Pumpengehäuse und/oder am Pumpengehäuse geführt, kann die Pumpe mitsamt Steuerventil als Montageeinheit einfacher montiert und die Gefahr von Montagefehlern verringert werden, da der Entlastungsanschluss nicht extra mit dem Förderkreis verbunden werden muss.

Das Steuerventil kann separat von dem Pumpengehäuse ausgeführt sein und bei Anordnung der Pumpe in einem Fluidförderkreis entfernt vom Pumpengehäuse oder am Pumpengehäuse angeordnet werden. Bevorzugt ist das Steuerventil jedoch integraler Bestandteil der Pumpe, indem das Pumpengehäuse auch ein Gehäuse für das Steuerventil bildet. Das Pumpengehäuse kann insbesondere den Ventilraum für den Steuerkolben bilden.

Das Pumpengehäuse kann bei integriertem oder am Pumpengehäuse angeordnetem Steuerventil den Druckanschluss, den Arbeitsanschluss und den Entlastungsanschluss des Steuerventils bilden. Der Entlastungskanal kann sich am Pumpengehäuse und/oder im Pumpengehäuse erstrecken, so dass bei integriertem oder am Pumpengehäuse befestigtem Steuerventil keine zusätzliche Verbindung für die Druckentlastung hergestellt werden muss. Die Pumpe kann einschließlich des Steuerventils eine Montageeinheit bilden, so dass mit der Montage des Pumpengehäuses im Fluidförderkreis automatisch auch das Steuerventil zumindest mechanisch montiert ist. In Bezug auf die Montage im Förderkreis ist ferner von Vorteil, wenn die Verbindungen für die drei genannten Anschlüsse des Steuerventils im und/oder am Pumpengehäuse gebildet sind und es keiner Verbindungsleitung und keines Anschlusses für das Stellfluid losgelöst vom Pumpengehäuse bedarf. So kann beispielsweise das Stellfluid für den Druckanschluss vom Hauptstrom im Pumpengehäuse an dessen Hochdruckseite abgezweigt werden. Falls das Stellfluid jedoch auf der Hochdruckseite stromabwärts vom Pumpengehäuse abgezweigt wird, ist die Abzweigung vorzugsweise stromabwärts von einem Filter zur Reinigung des Fluids angeordnet, um dem Steuerventil gereinigtes Stellfluid zuzuführen.

Obgleich die auf den Steuerkolben wirkende Steuerkraft oder eine Kraftkomponente der Steuerkraft elektromagnetisch erzeugt werden könnte, werden Ausführungen bevorzugt, in denen die Steuerkraft ausschließlich fluidisch, d. h. mit einem auf den Steuerkolben wirkenden Steuerfluid erzeugt wird. Ist das Steuerventil integraler Bestandteil des Pumpengehäuses oder unmittelbar am Pumpengehäuse angeordnet, ist es von Vorteil, wenn das Steuerventil nicht zur Erzeugung der Steuerkraft mit elektrischer Energie und/oder Signalen versorgt werden muss, da elektrische Leitungen in Umgebungen, in denen die Pumpe in vielen Anwendungsfällen angeordnet wird, beispielsweise als Schmierölpumpe an einer Brennkraftmaschine, störanfällig sind. Eine Verbindungsleitung für ein Steuerfluid ist demgegenüber weniger problematisch.

Das Steuerfluid kann ebenfalls von der Hochdruckseite der Pumpe abgezweigt werden. Das Steuerfluid kann insbesondere stromabwärts von einem Filter zur Reinigung des von der Pumpe geförderten Fluids abgezweigt werden, um einer am Steuerkolben gebildeten Steuerkammer gereinigtes Fluid zuzuführen. Grundsätzlich kann das Steuerfluid jedoch an der Hochdruckseite noch innerhalb des Pumpengehäuses abgezweigt werden.

Die Zusatzsteuereinrichtung umfasst in bevorzugten Ausführungen ein Modulierventil, das in einer Nebenstromleitung angeordnet ist, die an der Hochdruckseite der Pumpe vom Hauptstrom abzweigt, um das abgezweigte Hochdruckfluid als Steuerfluid zur Steuerkammer führen zu können. Das Modulierventil ist vorzugsweise ein Elektromagnetventil mit einem Signalanschluss für eine Verbindung mit einer externen Steuerung, beispielsweise einer Motorsteuerung. Mittels des Modulierventils kann der in der Steuerkammer herrschende Druck des Steuerfluids moduliert werden. Zur Druckmodulation kann das Modulierventil ein Mehrwegeventil mit diskreten Schaltstellungen oder ein Proportionalventil sein.

In bevorzugten Ausführungen umfasst das Steuerventil eine erste Steuerkammer und eine zweite Steuerkammer, und der Steuerkolben umfasst eine erste Kolbenfläche, die in der ersten Steuerkammer mit einem ersten Steuerfluiddruck beaufschlagbar ist, und eine zweite Kolbenfläche, die in der zweiten Steuerkammer mit einem zweiten Steuerfluiddruck beaufschlagbar ist. Das Steuerfluid für die jeweilige Steuerkammer kann jeweils von der Hochdruckseite der Pumpe abgezweigtes Fluid sein, wobei das Steuerfluid für die erste Steuerkammer an der gleichen oder an einer anderen Stelle wie das Steuerfluid für die zweite Steuerkammer abgezweigt werden kann. Die Beaufschlagung mit Steuerfluid kann insbesondere so gestaltet sein, dass die erste Steuerkammer mittels einer einfachen Nebenstromleitung mit dem Hauptstrom auf der Hochdruckseite der Pumpe verbunden ist, während in der Nebenstromleitung zur zweiten Steuerkammer das genannte Modulierventil angeordnet ist. Kann das Modulierventil den Druck des Steuerfluids in der zweiten Steuerkammer zwischen einem niederen Druck, beispielsweise dem Umgebungsdruck oder dem Druck im Saugbereich des Pumpengehäuses, und einem höheren Druck modulieren, beispielsweise einem Druck auf der Hochdruckseite der Pumpe, kann die auf den Steuerkolben der Spannkraft entgegenwirkende Steuerkraft zwischen zwei Werten gesteuert verändert werden, wodurch über das auf die Verstelleinrichtung wirkende Stellfluid die Förderkennlinie der Pumpe entsprechend moduliert werden kann.

Bei der Pumpe handelt es sich in bevorzugten Ausführungen um eine Verdrängerpumpe. Bei Verdrängerpumpen steigt das Fördervolumen proportional zur Fördergeschwindigkeit des Förderglieds, wenn keine das Fördervolumen verstellenden Maßnahmen getroffen werden. Handelt es sich bei der Pumpe wie bevorzugt um eine Rotationspumpe, steigt das Fördervolumen mit der Drehzahl des bei einer Rotationspumpe in der Förderkammer um eine Drehachse drehbaren Förderglieds. Grundsätzlich betrifft die Erfindung jedoch auch Linearhubpumpen. Das Fördervolumen ist daher, verallgemeinert ausgedrückt, proportional zur Hubfrequenz, der Drehhub- oder Linearhubfrequenz, der Pumpe. Man spricht bei Verdrängerpumpen daher auch vom spezifischen Fördervolumen, dem Fördervolumen pro Drehhub oder Linearhub. Die Proportionalität ist in vielen Anwendungen störend, insbesondere dann, wenn die Geschwindigkeit, mit der die Pumpe angetrieben wird, dem Bedarf des zu versorgenden Aggregats nicht angepasst werden kann. So werden in Fahrzeugen verwendete Pumpen, wie Schmierölpumpen, Servopumpen und Kühlmittelpumpen, mechanisch vom Antriebsmotor des Fahrzeugs angetrieben. Die Antriebsgeschwindigkeit der Pumpe ist in diesen Anwendungsfällen abhängig von der Drehzahl des Antriebsmotors und steht zumeist in einer festen Drehzahlbeziehung zur Drehzahl des Antriebsmotors. Auf derartige Anwendungen ist die Erfindung insbesondere gerichtet.

Die Verstelleinrichtung ist in bevorzugten Ausführungen dafür eingerichtet, das spezifische Fördervolumen einer Verdrängerpumpe zu verstellen. Im eingangs diskutierten Stand der Technik werden Verdrängerpumpen und Verstelleinrichtungen, wie die Erfindung sie insbesondere auch betrifft, offenbart. Über die dort beschriebenen Flügelzellenpumpen und Außenzahnradpumpen betrifft die Erfindung aber auch im Fördervolumen verstellbare Innenzahnradpumpen und Pendelschieberpumpen und grundsätzlich auch andere, im Fördervolumen verstellbare Pumpenbauarten. Ferner betrifft die Erfindung Strömungsmaschinen, wie etwa die im Falle von Kühlmittelpumpen üblicherweise verwendete Radialströmungsmaschinen. Ein Beispiel für eine im Fördervolumen verstellbare Strömungsmaschine mit einem Radialförderrad und einer Verstelleinrichtung mit einem Spaltringschieber wird in der US 2012/0204818 A1 beschrieben, die diesbezüglich in Bezug genommen wird.

Die Verstelleinrichtung kann insbesondere ein Verstellorgan umfassen, das mit dem Förderglied oder bei Pumpen mit mehreren Fördergliedern mit wenigstens einem der mehreren Förderglieder zur Verstellung des Fördervolumens zusammenwirkt. Ist die Pumpe als Flügelzellenpumpe mit einem in der Förderkammer drehbaren Förderglied ausgeführt, kann das Verstellorgan insbesondere ein das Förderglied umgebender Verstellring sein, der im Pumpengehäuse linearbeweglich oder schwenkbeweglich angeordnet ist, so dass bei einer Verstellbewegung des Verstellorgans die Exzentrizität zwischen der Rotationsachse des Förderglieds und einer zentralen Längsachse des Verstellrings und dadurch das Fördervolumen verstellt wird. In ähnlicher Weise kann auch das Fördervolumen von Innenzahnringpumpen und Pendelschieberpumpen verstellt werden. Bei einer Innenzahnringpumpe kann insbesondere das innenverzahnte Hohlrad das Verstellorgan bilden und für die Verstellung linearbeweglich oder schwenkbeweglich angeordnet sein. Ist die Pumpe als Außenzahnradpumpe ausgeführt, weist sie wenigstens zwei Förderglieder auf, die am Außenumfang verzahnt sind, sogenannte Außenzahnräder. Die Außenzahnräder stehen miteinander im Zahneingriff. Zur Verstellung des spezifischen Fördervolumens ist eines der Außenzahnräder relativ zum anderen axial verstellbar, so dass die Eingriffslänge der Außenzahnräder und dadurch das Fördervolumen der Pumpe verstellt werden kann. Das verstellbare Außenzahnrad ist Bestandteil einer axial verschiebbaren Verstelleinheit, die axial verschiebbare Kolben umfasst, zwischen denen das verstellbare Außenzahnrad drehbar gelagert ist. Die miteinander verbundenen Kolben bilden in derartigen Pumpenausführungen das Verstellorgan der Verstelleinrichtung. Verstelleinrichtungen, die in Kombination mit Radialförderrädern zum Einsatz kommen können, werden beispielsweise in der genannten US 2012/0204818 A1 beschrieben. Nach Diskussion verschiedener Arten von Verstelleinrichtungen wird in dieser Druckschrift insbesondere eine Verstelleinrichtung beschrieben, die als Verstellorgan einen Spaltringschieber umfasst, der das Radialförderrad umgibt.

Vorteilhafte Merkmale der Erfindung werden auch in den Unteransprüchen und in den Kombinationen der Unteransprüche beschrieben.

Nachfolgend werden Ausführungsbeispiele der Erfindung anhand von Figuren erläutert.

Es zeigen:
- Figur 1: eine im Fördervolumen verstellbare Pumpe mit einem Steuerventil und einem Entlastungskanal eines ersten Ausführungsbeispiels in isometrischer Darstellung,
- Figur 2: die Pumpe in einer Draufsicht,
- Figur 3: einen die Pumpe umfassenden Förderkreis in schematischer Darstellung,
- Figur 4: das Steuerventil in einem Längsschnitt,
- Figur 5: einen das Steuerventil umfassenden Pumpenbereich in einer Draufsicht und
- Figur 6: die Pumpe mit dem Steuerventil und einem Entlastungskanal eines zweiten Ausführungsbeispiels.

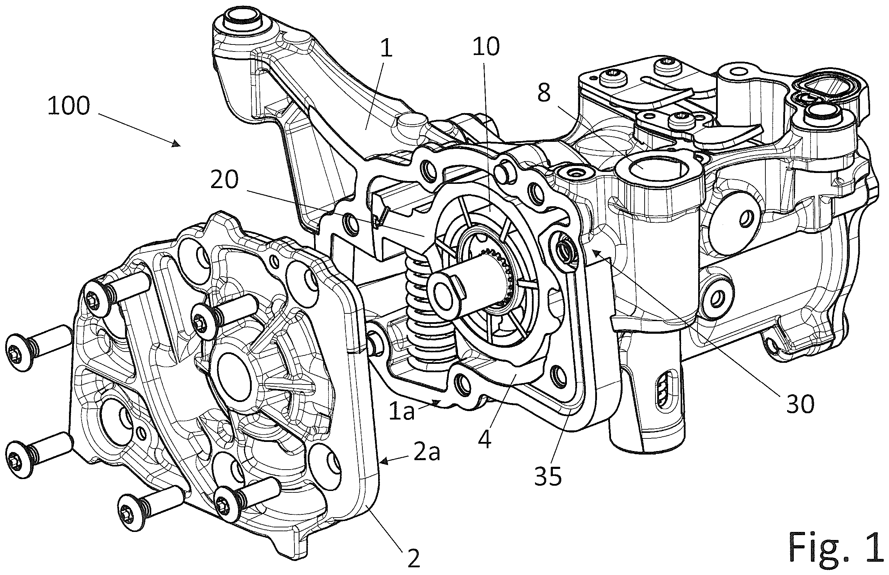

Figur 1 zeigt eine Pumpe, beispielhaft in Flügelzellenbauart. Die Pumpe umfasst ein Pumpengehäuse mit einer Gehäusestruktur 1 und einem Deckel 2. Die Gehäusestruktur 1 nimmt Komponenten der Pumpe auf und/oder lagert Komponenten der Pumpe beweglich. Die Gehäusestruktur 1 ist an einer axialen Stirnseite offen, wodurch die Anordnung von Komponenten der Pumpe in oder an der Gehäusestruktur 1 erleichtert wird. Der Deckel 2 ist an der Gehäusestruktur 1 montierbar und verschließt im montierten Zustand an der betreffenden Stirnseite die Gehäusestruktur 1. Die Gehäusestruktur 1 und der Deckel 2 weisen einander axial zugewandte Fügeflächen 1a und 2a auf, die bei Befestigung des Deckels 2 an der Gehäusestruktur 1 axial gegeneinander gedrückt werden, so dass ein Innenraum des Pumpengehäuses 1, 2 umlaufend abgedichtet wird.

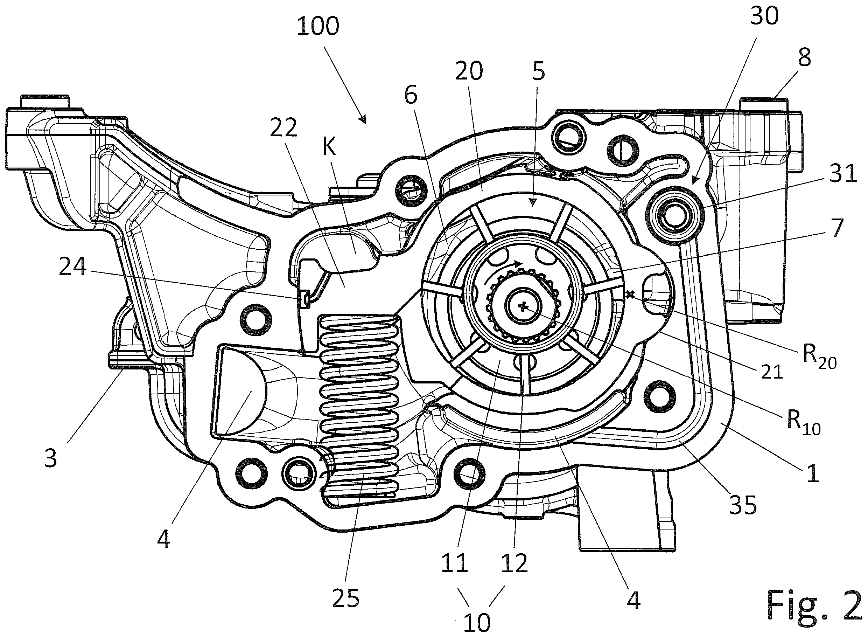

In Figur 2 ist die Pumpe in einer Draufsicht auf die offene Gehäusestruktur 1 dargestellt. Der Deckel 2 ist abgenommen, so dass Funktionskomponenten der Pumpe erkennbar sind.

Die Gehäusestruktur 1 umgibt eine Förderkammer 5, in der ein Förderglied 10 um eine Drehachse R₁₀ drehbar angeordnet ist. Die Gehäusestruktur 1 weist einen als Einlass dienenden Pumpenanschluss 3 und einen als Auslass dienenden Pumpenanschluss 8 für ein zu förderndes Fluid, beispielsweise Motorschmieröl, auf. Der Pumpenanschluss 3 dient auf der Niederdruckseite dem Anschluss der Pumpe an ein Reservoir für das Fluid, und der Pumpenanschluss 8 dient auf der Hochdruckseite dem Anschluss an ein mit dem Fluid zu versorgendes Aggregat. Die Förderkammer 5 umfasst eine Niederdruckseite und eine Hochdruckseite. Bei einem Drehantrieb des Förderglieds 10 in die eingezeichnete Drehrichtung, im Uhrzeigersinn, strömt Fluid durch den Pumpenanschluss 3 in das Pumpengehäuse 1, 2 und im Pumpengehäuse 1, 2 auf der Niederdruckseite durch einen Förderkammereinlass 6 in die Förderkammer 5 und wird unter Erhöhung des Drucks auf der Hochdruckseite der Pumpe durch einen Förderkammerauslass 7 ausgestoßen und über den Pumpenanschluss 8 abgefördert. Im Pumpengehäuse 1, 2 ist auf dessen Niederdruckseite ein Saugbereich 4 gebildet, den das von der Pumpe geförderte Fluid auf seinem Strömungsweg vom Pumpenanschluss 3 zum Förderkammereinlass 6 durchströmt. Aufgrund der Bauart der Pumpe 100 erstreckt sich der Saugbereich 4 bis in die Förderkammer 5 und umfasst auch noch den Bereich der Förderkammer 5, in dem sich die Förderzellen bei Drehung des Förderglieds 10 vergrößern. An den Saugbereich 4 schließt sich auf dem Weg der Strömung ein Hochdruckbereich des Pumpengehäuses 1, 2 an, der den Bereich der Förderkammer 5 umfasst, in dem sich die Förderzellen verkleinern, und der von diesem Teilbereich der Förderkammer 5 über den Förderkammerauslass 7 bis einschließlich zum Pumpenanschluss 8 reicht.

Das Förderglied 10 ist ein Förderrotor, im Beispiel ein Flügelrad, mit einer bezüglich der Drehachse R₁₀ zentralen Rotorstruktur 11 und über den Umfang der Rotorstruktur 11 verteilt angeordneten Flügeln 12. Die Flügel 12 sind in zum äußeren Umfang der Rotorstruktur 11 offenen Schlitzen der Rotorstruktur 11 in radialer oder zumindest im Wesentlichen radialer Richtung gleitend verschieblich geführt.

Das Förderglied 10 wird an seinem äußeren Umfang von einem Verstellorgan 20 umgeben, das beispielhaft als Verstellring geformt ist. Beim Drehantrieb des Förderglieds 10 gleiten dessen Flügel 12 über eine Innenumfangsfläche des Verstellorgans 20. Die Drehachse R₁₀ des Förderglieds 10 ist zu einer parallelen, in Bezug auf die Innenumfangsfläche zentralen Achse des Verstellorgans 20 exzentrisch angeordnet, so dass vom Förderglied 10 und dem Verstellorgan 20 gebildete Förderzellen sich bei Drehung des Förderglieds 10 auf der Niederdruckseite der Förderkammer 5 in Drehrichtung vergrößern und auf der Hochdruckseite wieder verkleinern. Aufgrund dieser mit der Drehzahl des Förderglieds 10 periodischen Vergrößerung und Verkleinerung der Förderzellen wird das Fluid von der Niederdruckseite zur Hochdruckseite und dort mit erhöhtem Druck durch den Förderkammerauslass 7 und dann durch den Pumpenanschluss 8 gefördert.

Das pro Umdrehung des Förderglieds 10 geförderte Fluidvolumen, das sogenannte spezifische Fördervolumen, kann verstellt werden. Ist das Fluid eine Flüssigkeit und somit in guter Näherung inkompressibel, ist das absolute Fördervolumen der Drehzahl des Förderglieds 10 direkt proportional. Bei kompressiblen Fluiden, beispielsweise Luft, ist der Zusammenhang von Fördermenge und Drehzahl zwar nicht linear, die absolute Fördermenge bzw. -masse steigt jedoch ebenfalls mit der Drehzahl.

Das spezifische Fördervolumen hängt von der Exzentrizität, also dem Abstand zwischen der zentralen Achse des Verstellorgans 20 und der Drehachse R₁₀ des Förderglieds 10 ab. Um diesen Achsabstand ändern zu können, ist das Verstellorgan 20 im Pumpengehäuse 1, 2 beweglich angeordnet, beispielhaft um eine Schwenkachse R₂₀ schwenkbeweglich. In Variationen kann ein modifiziertes Verstellorgan im Pumpengehäuse 1, 2 auch linear beweglich angeordnet sein. Zur Verstellung des spezifischen Fördervolumens bzw. der Exzentrizität wird eine Beweglichkeit quer zur Drehachse R₁₀ des Förderglieds 10 bevorzugt. Grundsätzlich wäre auch eine axiale Verstellbarkeit denkbar, durch die eine axiale Weite der Förderzellen verstellt werden kann.

Ein Schwenklagerbereich des Verstellorgans 20 ist mit 21 bezeichnet. Die Schwenklagerung ist als Gleitlager ausgeführt, indem das Verstellorgan 20 in seinem Schwenklagerbereich 21 mit einer Gegenfläche des Gehäuses 1 direkt in Gleitkontakt steht.

Für die Verstellung in eine Stellrichtung, im Ausführungsbeispiel Schwenkrichtung, wird das Verstellorgan 20 mit einem in eine Stellrichtung wirkenden Stellfluiddruck beaufschlagt. Diesem Stelldruck wirkt in die Gegenstellrichtung eine Rückstellkraft entgegen. Die Rückstellkraft wird von einer Federeinrichtung mit einem oder mehreren mechanischen Federgliedern, im Ausführungsbeispiel einem einzigen Federglied 25 erzeugt. Das Federglied 25 ist als Schraubendruckfeder ausgeführt und angeordnet. Für die Druckbeaufschlagung mit dem Stellfluid weist das Verstellorgan 20 an seiner von der Schwenkachse R₂₀ aus über die Drehachse R₁₀ des Förderglieds 10 gesehen gegenüberliegenden Seite einen funktional als Verstellkolben wirkenden Verstellorgan-Einwirkbereich 22 auf, der mit einem ringförmigen Teil des Verstellorgans 20 in einem Stück geformt ist. Zur einen Seite des Verstellorgan-Einwirkbereichs 22 ist im Pumpengehäuse 1, 2 eine Stelldruckkammer K gebildet, in die das Stellfluid einleitbar ist, um auf den Verstellorgan-Einwirkbereich 22 und über diesen auf das Verstellorgan 20 eine in die Stellrichtung wirkende Stellkraft auszuüben. Die Rückstellkraft wirkt beispielhaft ebenfalls unmittelbar auf den Verstellorgan-Einwirkbereich 22.

Die Stelldruckkammer K wird mit dem von der Pumpe geförderten Stellfluid gespeist, um das Verstellorgan 20 gegen die Kraft des Federglieds 25 in die Stellrichtung mit dem Stellfluiddruck zu beaufschlagen. Die Stellrichtung ist so gewählt, dass sich die Exzentrizität zwischen Förderglied 10 und Verstellorgan 20 und dadurch das spezifische Fördervolumen der Pumpe verkleinert, wenn sich das Verstellorgan 20 in die Stellrichtung bewegt.

Das Verstellorgan 20 bildet mit dem Gehäuse 1 einen Dichtspalt, der die Stelldruckkammer K in Stellrichtung vom Niederdruckbereich trennt. Im Dichtspalt ist ein Dichtelement 24 zur besseren Abdichtung des Dichtspalts angeordnet. Das Dichtelement 24 ist in einer Aufnahme des Verstellorgans 20 angeordnet.

In Bezug auf die Steuerung oder Regelung des Fördervolumens durch die erläuterte Beaufschlagung mit dem Steuerfluiddruck wird auf die DE 10 2011 086 175 B3 verwiesen, die diesbezüglich und auch zu weiteren Details der Funktionsweise der Pumpe des Ausführungsbeispiels in Bezug genommen wird.

Die Pumpe umfasst ein Steuerventil 30 zur Beeinflussung des in der Stelldruckkammer K herrschenden Stelldrucks. Das Steuerventil 30 ist integraler Bestandteil der Pumpe 100, indem das Pumpengehäuse 1, 2 auch das Gehäuse des Steuerventils 30 bildet. Die Pumpe 100 kann einschließlich des Steuerventils 30 als Einheit montiert werden. Die Förder- und Verstellkomponenten, wie insbesondere das Förderglied 10 und das Verstellorgan 20, und das Steuerventil 30 sind mittels des gemeinsamen Pumpengehäuses 1, 2 zu einer Montageeinheit zusammengefasst.

Ein Entlastungskanal 35 verbindet das Steuerventil 30 direkt mit dem Saugbereich 4. Der Entlastungskanal 35 erstreckt sich im Pumpengehäuse 1, 2 unmittelbar vom Steuerventil 30 bis unmittelbar zum Saugbereich 4. Er mündet an einem Ende in einen vom Pumpengehäuse 1, 2 gebildeten Ventilraum 31 des Steuerventils 30 und am anderen Ende in den Saugbereich 4. Im dargestellten Ausführungsbeispiel ist der Entlastungskanal 35 in der Fügefläche 1a der Gehäusestruktur 1 geformt und der Deckel 2 deckt im montierten Zustand den Entlastungskanal 35 fluiddicht ab.

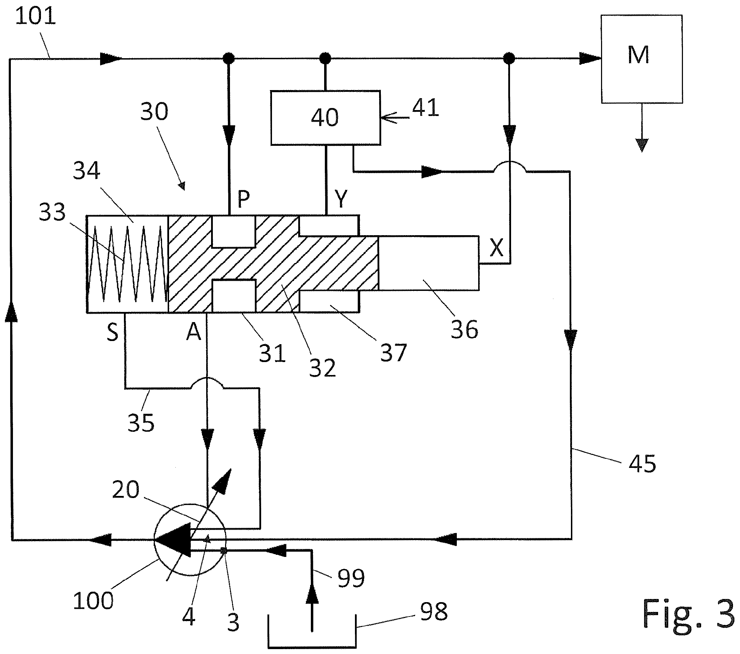

In Figur 3 ist ein die Pumpe 100 enthaltender Fluidförderkreis schematisch dargestellt. Die Pumpe 100 fördert Fluid aus einem Reservoir 98 zu einem mit dem Fluid zu versorgenden Aggregat M, beispielsweise Schmieröl zu einem das Aggregat M bildenden Verbrennungsmotor zum Antrieb eines Kraftfahrzeugs. Nach Durchströmen des Aggregats M strömt das Fluid im Druck entlastet zurück in das Reservoir 98. Auf der Niederdruckseite fördert die Pumpe 100 das Fluid vom Reservoir 98 durch eine Zuführleitung 99, den Pumpenanschluss 3 und den Saugbereich 4 des Pumpengehäuses 1, 2 in die Förderkammer 5 (Fig. 2), aus der es mit erhöhtem Druck ausgestoßen wird. Auf der Hochdruckseite wird ein von der Pumpe 100 geförderter Hauptstrom 101 zum Aggregat M gefördert. Vom Hauptstrom 101 wird ein kleinerer Teil abgezweigt und als Stellfluid zu einem Druckanschluss P des Steuerventils 30 geführt. Der Druckanschluss P ist entsprechend über eine Nebenstromleitung mit dem Hauptstrom 101 verbunden. Das Steuerventil 30 ist über einen Arbeitsanschluss A mit der Verstelleinrichtung der Pumpe 100 verbunden. Die Verstelleinrichtung umfasst die Stelldruckkammer K (Figur 2) und das schematisch angedeutete Verstellorgan 20. Die Verstelleinrichtung kann eine weitere Stelldruckkammer, gegebenenfalls auch mehrere weitere Stelldruckkammern umfassen, in der oder denen das Stellfluid oder ein anderes Stellfluid auf das Verstellorgan 20 wirkt. Das Verstellorgan 20 steht in Figur 3 stellvertretend für die anderen Komponenten der Verstelleinrichtung, wie etwa die Stelldruckkammer K, das Federglied 25 und optional eine oder mehrere weitere Stelldruckkammern.

Das Steuerventil 30 weist ferner einen Entlastungsanschluss S für das Stellfluid auf. Der Entlastungsanschluss S ist über den Entlastungskanal 35 direkt mit dem Saugbereich 4 verbunden. Das Reservoir 98 wird umgangen. Durch den Entlastungsanschluss S strömt kein Fluid zum Reservoir 98, und es strömt auch kein Fluid vom Reservoir 98 durch den Entlastungsanschluss S zum Steuerventil 30. Zwischen dem Entlastungsanschluss S und dem Reservoir 98 besteht daher keine Fluidverbindung. Das unter Druck stehende Stellfluid wird über den Entlastungsanschluss S energieeffizient in den Saugbereich 4 zurückgeführt. Die Pumpe 100 muss zur Druckentlastung des Verstellorgans 20 zurückgeführtes Stellfluid nicht erst wieder vom Reservoir 98 ansaugen. Das auf kurzem Wege zurückgeführte Stellfluid weist einen höheren Druck als das im Reservoir befindliche Fluid auf und enthält weniger Luft. Beides trägt zur Verbesserung des Wirkungsgrads der Pumpe 100 bei.

Das Steuerventil 30 umfasst einen Ventilraum 31, den wie bereits erwähnt das Pumpengehäuse 1, 2 bildet, und einen im Ventilraum 31 beweglichen Steuerkolben 32. Der Steuerkolben 32 ist im Ventilraum 31 zwischen einer ersten Kolbenposition und einer zweiten Kolbenposition hin und her beweglich. In Figur 3 nimmt der Steuerkolben 32 eine Zwischenposition zwischen der ersten und der zweiten Kolbenposition ein. In der dargestellten Zwischenposition trennt der Steuerkolben 32 den Druckanschluss P sowohl vom Arbeitsanschluss A als auch vom Entlastungsanschluss S. Ist der Arbeitsanschluss A mit der Stelldruckkammer K (Figur 2) verbunden, so blockiert das Steuerventil 30 bei in der Zwischenposition befindlichem Steuerkolben 32 die Stelldruckkammer K, so dass der in der Stelldruckkammer K herrschende Stelldruck von unvermeidlichen Leckverlusten abgesehen konstant bleibt.

Bewegt sich der Steuerkolben 32 aus der Zwischenposition in die erste Kolbenposition, in Figur 3 nach links, wird der Druckanschluss P mit dem Arbeitsanschluss A verbunden, so dass das Stellfluid zur Verstelleinrichtung gelangt und das Verstellorgan 20 mit dem Stelldruck, einem Druck der Hochdruckseite der Pumpe 100, beaufschlagt. Die Verstelleinrichtung ist dabei so ausgelegt, dass eine Erhöhung des Stelldrucks eine Verringerung des spezifischen Fördervolumens der Pumpe 100 bewirkt.

Bewegt sich der Steuerkolben 32 aus der Zwischenposition in die zweite Kolbenposition, in Figur 3 nach rechts, wird der Arbeitsanschluss A zunächst vom Druckanschluss P getrennt und spätestens bei Erreichen der zweiten Kolbenposition mit dem Entlastungsanschluss S und dem Entlastungskanal 35 verbunden. Das Stellfluid kann bei in der zweiten Kolbenposition befindlichem Steuerkolben 32 über den Arbeitsanschluss A in den Ventilraum 31 und aus diesem über den Entlastungsanschluss S in den Saugbereich 4 abströmen. Die Stelldruckkammer K (Figur 2) und/oder optional eine andere Stelldruckkammer der Verstelleinrichtung steht in diesem Zustand des Steuerventils 30, bei in der zweiten Kolbenposition befindlichem Steuerkolben 32, unter dem vergleichsweise niederen Druck des Saugbereichs 4, wodurch eine effektive Druckentlastung des Verstellorgans 20 erzielt wird.

Das Steuerventil 30 umfasst eine Spanneinrichtung 33, die auf den Steuerkolben 32 eine in Richtung auf die zweite Kolbenposition wirkende Spannkraft ausübt. Die Spanneinrichtung 33 ist beispielhaft eine Schraubendruckfeder, die in einer Spannkammer 34 des Ventilraums 31 angeordnet ist und auf eine axiale Stirnseite des Steuerkolbens 32 wirkt. Der Entlastungsanschluss S mündet in die Spannkammer 34.

Im Ventilraum 31 sind eine erste Steuerdruckkammer 36 mit einem ersten Kammeranschluss X und eine zweite Steuerdruckkammer 37 mit einem zweiten Kammeranschluss Y gebildet. In den Steuerdruckkammern 36 und 37 ist der Steuerkolben 32 jeweils mit einem Steuerdruck eines Steuerfluids beaufschlagbar. Das jeweilige Steuerfluid wirkt in der Steuerdruckkammer 36 auf eine erste Kolbenfläche und in der Steuerdruckkammer 37 auf eine zweite Kolbenfläche des im Ausführungsbeispiel als Stufenkolben ausgeführten Steuerkolbens 32. In Abhängigkeit von den Steuerdrücken und den Kolbenflächen übt das jeweilige Steuerfluid auf den Steuerkolben 32 in der Steuerdruckkammer 36 eine erste Steuerkraft und in der Steuerdruckkammer 37 eine zweite Steuerkraft aus. Das Steuerventil 30 ist so gestaltet, dass die erste und die zweite Steuerkraft jeweils der Spannkraft der Spanneinrichtung 33 entgegenwirken.

Die Steuerdruckkammer 36 ist an ihrem Kammeranschluss X über eine vom Hauptstrom 101 abzweigende Nebenstromleitung ständig mit dem von der Pumpe 100 geförderten Hauptstrom 101 verbunden. Das von der Pumpe geförderte Fluid kommt somit auch als Steuerfluid zum Einsatz, wobei in der Steuerdruckkammer 36 im Pumpenbetrieb permanent ein Steuerdruck herrscht, der vom Druck der Hochdruckseite der Pumpe 100 abhängt, beispielsweise zumindest im Wesentlichen dem Druck an der Abzweigungsstelle entspricht.

Um die zweite Steuerdruckkammer 37 mit Steuerfluid beaufschlagen zu können, wird auch das Steuerfluid für diese Kammer 37 vom Hauptstrom 101 abgezweigt. Das vom Hauptstrom 101 zur Steuerdruckkammer 37 abgezweigte Steuerfluid wird über eine weitere Nebenstromleitung zum Kammeranschluss Y geführt, allerdings nicht direkt. In dieser Nebenstromleitung ist ein Modulierventil 40 angeordnet. Mittels des Modulierventils 40 kann der Kammeranschluss Y wahlweise mit dem Hauptstrom 101 oder stattdessen über eine Rückführleitung 45 mit dem Saugbereich 4 verbunden werden. Das Steuerventil 30 und das Modulierventil 40 sind somit dafür eingerichtet, dass der Steuerkolben 32 der Spannkraft der Spanneinrichtung 33 entgegen permanent in der ersten Steuerdruckkammer 36 mit einem ersten Steuerdruck beaufschlagt wird und mittels des Modulierventils 40 ein ebenfalls der Spannkraft entgegenwirkender zweiter Steuerdruck und somit eine zusätzliche Steuerkraft wahlweise zugeschaltet oder bis auf den Druck des Saugbereichs 4 weggeschaltet werden kann.

Das Modulierventil 40 kann dafür eingerichtet sein, nur zwischen den beiden genannten Schaltzuständen hin und her zu schalten. Es kann auch dafür eingerichtet sein, zwischen den zwei extremen Schaltzuständen einen oder mehrere mittlere Schaltzustände einzunehmen, um die zusätzliche Steuerkraft in mehreren Stufen variieren zu können. Das Modulierventil 40 kann ferner dafür eingerichtet sein, den Steuerdruck in der zweiten Steuerdruckkammer 37 und somit die zusätzliche Steuerkraft kontinuierlich zu verändern.

Mittels des Modulierventils 40 können die in den Steuerdruckkammern 36 und 37 herrschenden Steuerdrücke, bei denen sich ein Gleichgewicht der auf den Steuerkolben 32 wirkenden Kräfte einstellt, zum einen die Spannkraft der Spanneinrichtung 33 und zum anderen die vom Steuerfluid erzeugten Steuerkräfte, gezielt moduliert werden. Entsprechend kann der im Kräftegleichgewicht sich einstellende Gleichgewichtsdruck des von der Pumpe 100 geförderten Fluids moduliert und dadurch die Förderkennlinie der Pumpe 100, der Förderdruck über der Pumpendrehzahl, verändert werden. Insbesondere kann eine Obergrenze für den Förderdruck verstellt, beispielsweise wahlweise auf eines von wenigstens zwei unterschiedlichen Druckniveaus eingestellt werden.

Das Steuerfluid wird zur Druckentlastung der zweiten Steuerdruckkammer 37 unter Umgehung des Reservoirs 98 in einer Rückführleitung 45 zur Pumpe 100 zurückgeleitet, vorzugsweise wie im Ausführungsbeispiel direkt in den Saugbereich 4 des Pumpengehäuses 1, 2. Die Rückführleitung 45 kann in einer Modifikation ebenfalls unter Umgehung des Reservoirs 98 stattdessen auch zu einer Verbindungsstelle stromabwärts vom Reservoir 98 und stromaufwärts vom Pumpenanschluss 3 zur Niederdruckseite der Pumpe 100 zurückgeführt werden. Für die Rückführung des Steuerfluids unter Umgehung des Reservoirs 98 gelten die zum Stellfluid gemachten Ausführungen entsprechend. Obgleich das Steuerfluid zur Druckentlastung in den bevorzugten Ausführungen unter Umgehung des Reservoirs 98 zurückgeführt wird, sollen konventionelle Anordnungen, in denen das Steuerfluid zur Druckentlastung zum Reservoir 98 zurückgeführt wird, nicht ausgeschlossen werden.

Das Modulierventil 40 ist ein Elektromagnetventil. Es kann ein Proportionalventil sein, mit dem der Steuerdruck in der Steuerdruckkammer 37 kontinuierlich verstellt werden kann. Es kann insbesondere aber auch ein Mehrwege-Schaltventil sein, das zwischen zwei, drei oder gegebenenfalls auch mehr Schaltzuständen umschaltbar ist. Im Ausführungsbeispiel handelt es sich um solch ein Schaltventil, das die Steuerdruckkammer 37 in einem ersten Schaltzustand mit der Hochdruckseite der Pumpe, im Ausführungsbeispiel mit dem Hauptstrom 101, verbindet und in einem zweiten Schaltzustand von der Hochdruckseite der Pumpe trennt und stattdessen über die Rückführleitung 45 unter Umgehung des Reservoirs 98 mit der Pumpe 100 verbindet. Im ersten Schaltzustand des Modulierventils 40 ist die Steuerdruckkammer 37 daher mit der Hochdruckseite der Pumpe 100 verbunden und im zweiten Schaltzustand mit deren Niederdruckseite. Nimmt das Modulierventil 40 den ersten Schaltzustand ein, wirken die Steuerdrücke in den Steuerdruckkammern 36 und 37 gemeinsam auf den Steuerkolben 32 der Spannkraft der Spanneinrichtung 33 entgegen in Richtung auf die erste Kolbenposition. Nimmt das Modulierventil 40 den zweiten Schaltzustand ein, wirkt praktisch nur noch der Steuerdruck in der ersten Steuerdruckkammer 36 auf den Steuerkolben 32. Entsprechend höher muss dieser Steuerdruck sein, um den Steuerkolben 32 gegen die rückstellende Spannkraft der Spanneinrichtung 33 in die erste Kolbenposition zu bewegen, bei deren Einnahme der Druckanschluss P mit dem Arbeitsanschluss A verbunden ist, so dass der Stelldruck des Stellfluids, hier der Druck von der Hochdruckseite der Pumpe 100, auf das Verstellorgan 20 und somit in Richtung auf eine Verringerung des Fördervolumens der Pumpe wirkt.

Das Modulierventil 40 weist einen Signalanschluss 41 auf, an dem es mit einer externen Steuerung verbunden ist. Handelt es sich bei dem Aggregat M um einen Antriebsmotor eines Fahrzeugs, kann insbesondere eine Motorsteuerung die externe Steuerung bilden. Derartige Motorsteuerungen sind typischerweise als Kennlinien- oder Kennfeldsteuerungen gebildet. Bei einer Motorkennfeldsteuerung kann der Bedarf des Antriebsmotors in einem Kennfeld unterschiedlicher Motorgrößen, etwa einer Motortemperatur und/oder einer Motordrehzahl und/oder eines Schmieröldrucks an einer kritischen Stelle des Motors und/oder des Lastzustands des Motors und dergleichen mehr in einem elektronischen Speicher der Steuerung abgelegt sein. Die externe Steuerung bildet auf der Basis entsprechender Messgrößen und des abgespeicherten Kennfelds das Ausgangssignal, mit dem sie das Modulierventil 40 ansteuert, um den Förderdruck der Pumpe 100 zu modulieren, der ausreicht, den Steuerkolben 32 in die erste Kolbenposition zu bewegen.

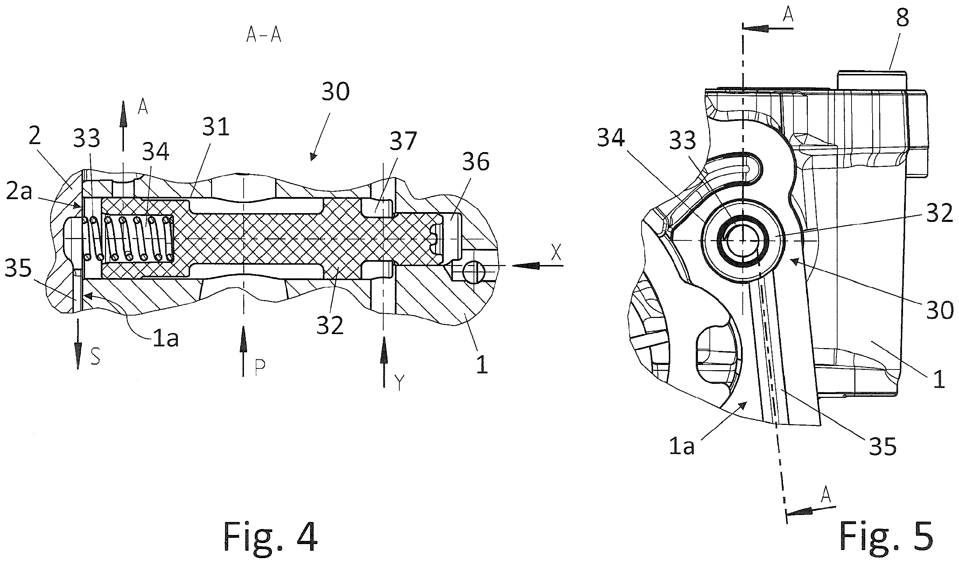

In Figur 4 ist das Steuerventil 30 in einem Längsschnitt dargestellt. Erkennbar sind die Anschlüsse A, P und S für das Stellfluid und die Anschlüsse X und Y für das Steuerfluid zusammen mit den im Pumpengehäuse 1, 2 erstreckten Endabschnitten der Zu- und Abführkanäle. Die Form des Steuerkolbens 32 zum Erhalt eines Stufenkolbens mit einer in der Steuerdruckkammer 36 mit dem Steuerfluid beaufschlagten ersten Kolbenfläche und einer in der Steuerdruckkammer 37 beaufschlagten zweiten Kolbenfläche ist ebenfalls erkennbar.

Der Ventilraum 31 ist primär in der Gehäusestruktur 1 geformt, beispielhaft als axiale Sackbohrung. Er ist an einem der beiden Stirnenden des Steuerkolbens 32 in Richtung auf den Deckel 2 offen. Der Deckel 2 verschließt den Ventilraum 31 an dem offenen Ende. In dem vom Deckel 2 verschlossenen Endbereich des Ventilraums 31 ist die Spannkammer 34 gebildet, so dass der Steuerkolben 32 und anschließend die Spanneinrichtung 33 durch die Öffnung in den Ventilraum 31 eingesetzt werden können. Die Spanneinrichtung 33 stützt sich nach Montage des Deckels 2 axial an diesem ab.

Der Entlastungskanal 35 mündet in die Spannkammer 34, so dass die Spannkammer 34 in jedem Zustand des Steuerventils 30, d. h. ungeachtet der Position des Steuerkolbens 32, mit dem Saugbereich 4 des Pumpengehäuses 1, 2 verbunden ist.

Figur 5 zeigt die unmittelbare Umgebung des Steuerventils 30 in einer Draufsicht auf die Fügefläche 1a der Gehäusestruktur 1. Der Deckel 2 ist abgenommen, so dass der Blick in den Ventilraum 31 frei ist. Der Steuerkolben 32 ist eingeschoben, die Spanneinrichtung 33 ist ebenfalls positioniert. Es muss lediglich noch der Deckel 2 an der Gehäusestruktur 1 befestigt werden, um die Pumpe als solche einschließlich des integrierten Steuerventils 30 für die Anordnung in einem Förderkreis zu komplettieren.

Im ersten Ausführungsbeispiel ist der Entlastungskanal 35 vollständig an der Gehäusestruktur 1 geformt. Der Entlastungskanal 35 verläuft in der Fügefläche 1a als ein in Richtung auf den Deckel 2 offener Kanal, den der Deckel 2 im montierten Zustand dicht abschließt. In einer Modifikation kann der Entlastungskanal 35 stattdessen auch in der Fügefläche 2a des Deckels 2 geformt sein und dort den gleichen Verlauf wie der im ersten Ausführungsbeispiel an der Gehäusestruktur 1 geformte Entlastungskanal 35 aufweisen. In Figur 4 ist eine derartige Modifikation angedeutet. In Figur 4 ist nur ein dem Steuerventil 30 naher Endabschnitt des Entlastungskanals 35 erkennbar. Der Endabschnitt verläuft in der Fügefläche 2a des Deckels 2 und nicht, wie in den Figuren 2 und 5 für das erste Ausführungsbeispiel illustriert, in der Fügefläche 1a der Gehäusestruktur 1.

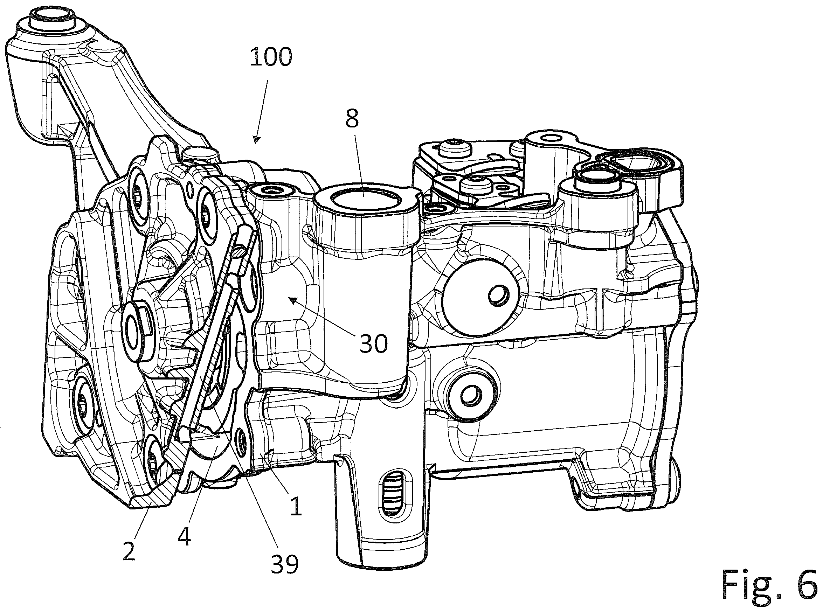

Figur 6 zeigt eine Pumpe 100, die sich von der vorstehend beschriebenen Pumpe 100 nur dadurch unterscheidet, dass der Entlastungskanal, der den Entlastungsanschluss S des Steuerventils 30 mit dem Saugbereich 4 des Pumpengehäuses 1, 2 verbindet, vollständig im Deckel 2 gebildet ist. Während der Entlastungskanal 35 des ersten Ausführungsbeispiels in der Fügefläche 1a der Gehäusestruktur 1 oder, in der in Figur 4 angedeuteten Modifikation in der Fügefläche 2a des Deckels 2 geformt ist und daher letztlich erst beim Fügen von Gehäusestruktur 1 und Deckel 2 fertiggestellt wird, verläuft der Entlastungskanal des zweiten Ausführungsbeispiels, der aufgrund dieses Unterschieds als Entlastungskanal 39 bezeichnet ist, innerhalb des Deckels 2. Der Entlastungskanal 39 kann insbesondere einen geraden Kanalhauptabschnitt aufweisen, der in einem Endbereich mit dem Steuerventil 30 und in einem anderen Endbereich mit dem Saugbereich 4 überlappt und über kurze, jeweils im Deckel 2 geformte Kanalabschnitte, die vom Kanalhauptabschnitt abzweigen oder abknicken, mit dem Ventilraum 31 des Steuerventils 30 und dem Saugbereich 4 verbunden ist. Ein Vorteil des Entlastungskanals 35 des ersten Ausführungsbeispiels ist die einfache Herstellbarkeit, ein Vorteil des Entlastungskanals 39 des zweiten Ausführungsbeispiels ist die Vereinfachung in Bezug auf die Abdichtung des Innenraums des Pumpengehäuses 1, 2.

In den Ausführungsbeispielen ist der Druckanschluss P des Steuerventils 30 innerhalb des Pumpengehäuses 1, 2 mit der Hochdruckseite der Pumpe 100 verbunden. Das Stellfluid wird noch im Hochdruckbereich des Pumpengehäuses 1, 2 abgezweigt und zum Druckanschluss P geführt. Die Verbindung zwischen dem Arbeitsanschluss A und der Stelldruckkammer K und/oder optional einer anderen Stelldruckkammer der Verstelleinrichtung verläuft zweckmäßigerweise ebenfalls innerhalb des Pumpengehäuses 1, 2. Da auch der Entlastungsanschluss S über den vollständig im Pumpengehäuse 1, 2 verlaufenden Entlastungskanal 35 oder 39 ebenfalls innerhalb des Pumpengehäuses 1, 2 mit dem Saugbereich 4 verbunden ist, wird ein hinsichtlich des Stellfluids maximaler Grad der Integration erzielt. Die Montage der Pumpe wird vereinfacht, weil für das Stellfluid keine zusätzlichen Zuführ- und/oder Abführleitungen vorgesehen und bei Anordnung in einem Förderkreis angeschlossen werden müssen. Andererseits wäre es jedoch denkbar, das Stellfluid stromaufwärts vom Pumpengehäuse 1, 2, d. h. stromaufwärts vom Pumpenanschluss 8, vom Hauptstrom 101 (Figur 3) abzuzweigen. In derartigen Abwandlungen wird das Stellfluid vorteilhafterweise stromaufwärts von einem der Pumpe 100 nachgeordneten Filter und vor einem ersten mit dem Fluid zu versorgenden Aggregat abgezweigt, um im Filter gereinigtes Fluid zum Steuerventil 30 zu führen.

Das Modulierventil 40 kann vorteilhafterweise losgelöst vom Pumpengehäuse 1, 2 angeordnet sein. Eine vom Pumpengehäuse 1, 2 entfernte Anordnung ist insbesondere dann von Vorteil, wenn das Modulierventil 40 als Elektromagnetventil gebildet ist. Zum Modulierventil 40 führende Leitungen zur Stromversorgung und/oder für die Übertragung von Steuersignalen müssen bei einer von der Pumpe 100 entfernten Anordnung des Modulierventils 40 nicht oder weniger aufwändig gegen das von der Pumpe 100 zu fördernde Fluid abgeschirmt werden. Dies erfordert jedoch auf der anderen Seite, dass die Zuführleitungen für das Steuerfluid erst noch an das Pumpengehäuse 1, 2 angeschlossen werden müssen. Da die Strömungsquerschnitte des Modulierventils 40 typischerweise kleiner sind als die Strömungsquerschnitte des Steuerventils 30, ist es in Bezug auf das Steuerfluid besonders vorteilhaft, wenn es erst nach Reinigung in einem Filter vom Hauptstrom 101 abgezweigt wird, um der Gefahr einer Verstopfung der engen Ventilquerschnitte vorzubeugen.

Mit Blick auf die Figuren 1 und 6 sei lediglich der Vollständigkeit wegen angemerkt, dass die Pumpe 100 in den Ausführungsbeispielen Bestandteil einer Pumpeneinheit ist, die über die Pumpe 100 hinaus auch noch eine Vakuumpumpe umfasst und die Pumpe 100 mit der Vakuumpumpe eine Montageeinheit bildet. Für die Erfindung ist dies jedoch ohne Belang.

## Patentansprüche

1. Pumpe mit verstellbarem Fördervolumen, die Pumpe umfassend:
(a) ein Pumpengehäuse (1, 2) mit einem Pumpenanschluss (3) zur Verbindung der Pumpe (100) mit einem Reservoir (98) eines zu fördernden Fluids, einer Förderkammer (5), die auf einer Niederdruckseite der Pumpe einen Förderkammereinlass (6) und auf einer Hochdruckseite der Pumpe einen Förderkammerauslass (7) für ein Fluid aufweist, und einem vom Pumpenanschluss (3) auf der Niederdruckseite bis wenigstens zum Förderkammereinlass (6) erstreckten Saugbereich (4),
(b) ein in der Förderkammer (5) bewegliches Förderglied (10) zur Förderung des Fluids von der Niederdruckseite zur Hochdruckseite, vorzugsweise ein in der Förderkammer (5) um eine Drehachse (R₁₀) drehbarer Förderrotor (10),
(c) eine Verstelleinrichtung (20, 25, K) zur Verstellung des Fördervolumens der Pumpe,
(d) ein außerhalb des Saugbereichs (4) angeordnetes Steuerventil (30) umfassend:
(d1) einen Druckanschluss (P) für ein vom Fluid der Hochdruckseite abgezweigtes Stellfluid,
(d2) einen mit der Verstelleinrichtung (20) verbundenen Arbeitsanschluss (A) für das Stellfluid,
(d3) einen Entlastungsanschluss (S) für das Stellfluid,
(d4) einen Ventilraum (31) und einen Steuerkolben (32), der im Ventilraum (31) zwischen einer ersten Kolbenposition und einer zweiten Kolbenposition hin und her beweglich ist,
(d5) und eine Spanneinrichtung (33) zur Erzeugung einer in Richtung auf eine der Kolbenpositionen auf den Steuerkolben (32) wirkenden Spannkraft,
(e) und eine Zusatzsteuereinrichtung (36, 37, 40) zur Erzeugung einer auf den Steuerkolben (32) der Spannkraft der Spanneinrichtung (33) entgegen wirkenden Steuerkraft,
(f) wobei das Steuerventil (30)
(f1) bei in der ersten Kolbenposition befindlichem Steuerkolben (32) den Arbeitsanschluss (A) mit dem Druckanschluss (P) verbindet und
(f2) bei in der zweiten Kolbenposition befindlichem Steuerkolben (32) den Arbeitsanschluss (A) vom Druckanschluss (P) trennt und mit dem Entlastungsanschluss (S) verbindet,
**dadurch gekennzeichnet, dass**
(g) der Entlastungsanschluss (S) unter Umgehung des Reservoirs (98) mit dem Saugbereich (4) verbunden ist und
(h) das Steuerventil (30) über den Entlastungsanschluss (S) nicht in Fluidverbindung mit dem Reservoir steht, sodass über den Entlastungsanschluss kein Fluid vom Reservoir in den Ventilraum des Steuerventils strömt, und insbesondere kein Fluid vom Steuerventil über den Entlastungsanschluss zum Reservoir strömt.

2. Pumpe nach dem vorhergehenden Anspruch, wobei der Entlastungsanschluss (S) mittels eines Entlastungskanals (35; 39) mit dem Saugbereich (4) verbunden ist und der Entlastungskanal (35; 39) am Pumpenanschluss (3) oder stromab vom Pumpenanschluss (3) in den Saugbereich (4) mündet.

3. Pumpe nach dem vorhergehenden Anspruch, wobei das Steuerventil (30) im oder am Pumpengehäuse (1, 2) angeordnet ist und sich der Entlastungskanal (35; 39) vom Entlastungsanschluss (S) bis in den Saugbereich (4) im und/oder am Pumpengehäuse (1, 2) erstreckt.

4. Pumpe nach einem der vorhergehenden Ansprüche, wobei das Pumpengehäuse (1, 2) eine die Förderkammer (5) umgebende Gehäusestruktur (1) und einen mit der Gehäusestruktur (1) verbundenen Gehäusedeckel (2) umfasst, der Gehäusedeckel (2) mit der Gehäusestruktur (1) einen um die Förderkammer (5) erstreckten Fügespalt (1a, 2a) bildet und der Entlastungsanschluss (S) mittels eines Entlastungskanals (35; 39), der sich im und/oder am Gehäusedeckel (2) und/oder im Fügespalt (1a, 2a) erstreckt, mit dem Saugbereich (4) verbunden ist.

5. Pumpe nach einem der vorhergehenden Ansprüche, wobei
- das Pumpengehäuse (1, 2) eine die Förderkammer (5) umgebende Gehäusestruktur (1) und einen mit der Gehäusestruktur (1) verbundenen Gehäusedeckel (2) umfasst,
- der Gehäusedeckel (2) mit der Gehäusestruktur (1) einen um die Förderkammer (5) erstreckten Fügespalt (1a, 2a) bildet,
- der Ventilraum (31) des Steuerventils (30) in Bewegungsrichtung des Steuerkolbens (32) bis in oder durch den Fügespalt (1a, 2a) erstreckt ist und
- der Gehäusedeckel (2) den Ventilraum (31) verschließt.

6. Pumpe nach einem der vorhergehenden Ansprüche, wobei die Zusatzsteuereinrichtung (36, 37, 40) mit einer externen Steuerung, vorzugsweise einer Steuerung eines von der Pumpe (100) mit dem Fluid zu versorgenden Aggregats verbindbar und dafür eingerichtet ist, die Größe der Spannkraft in Abhängigkeit von Steuersignalen der externen Steuerung zu modulieren.

7. Pumpe nach einem der vorhergehenden Ansprüche, wobei das Steuerventil (30) eine Steuerkammer (37) mit einem Einlass (Y) für ein Steuerfluid zur Erzeugung der Steuerkraft durch einen in der Steuerkammer (37) auf den Steuerkolben (32) wirkenden Steuerfluiddruck umfasst und ein in einem Strömungsweg des Steuerfluids angeordnetes Modulierventil (40) zur Änderung des in der Steuerkammer (37) wirkenden Steuerfluiddrucks umfasst, wobei das Steuerfluid vorzugsweise von dem von der Pumpe (100) geförderten Fluid auf der Hochdruckseite der Pumpe abgezweigt wird.

8. Pumpe nach einem der vorhergehenden Ansprüche, wobei
- der Steuerkolben (32) eine erste Kolbenfläche und eine zweite Kolbenfläche aufweist,
- das Steuerventil (30)
eine erste Steuerkammer (36) mit einem ersten Steueranschluss (X) für ein Steuerfluid zur Erzeugung einer ersten Steuerkraft durch einen in der ersten Steuerkammer (36) auf die erste Kolbenfläche der Spannkraft entgegen wirkenden ersten Steuerfluiddruck und
eine zweite Steuerkammer (37) mit einem zweiten Steueranschluss (Y) für ein Steuerfluid zur Erzeugung einer zweiten Steuerkraft durch einen in der zweiten Steuerkammer (37) auf die zweite Kolbenfläche der Spannkraft entgegen wirkenden zweiten Steuerfluiddruck umfasst,
- und die Zusatzsteuereinrichtung (36, 37, 40) ein Modulierventil (40) zur Änderung des ersten Steuerfluiddrucks und/oder des zweiten Steuerfluiddrucks umfasst.

9. Pumpe nach dem vorhergehenden Anspruch, wobei das erste Steuerfluid und/oder das zweite Steuerfluid von dem von der Pumpe (100) geförderten Fluid auf der Hochdruckseite der Pumpe abgezweigt wird.

10. Pumpe nach einem der Ansprüche 7 bis 9, wobei das Modulierventil (40) separat vom Pumpengehäuse (1, 2) ausgeführt und in einem Förderkreis der Pumpe (100) separat vom Pumpengehäuse (1, 2) angeordnet ist.

11. Pumpe nach einem der Ansprüche 7 bis 10, wobei das Steuerfluid auf der Hochdruckseite stromabwärts von einem Filter zur Reinigung des Fluids abgezweigt wird.

12. Pumpe nach einem der vorhergehenden Ansprüche, wobei die Verstelleinrichtung (20, 25, K) ein dem Förderglied (10) zugeordnetes Verstellorgan (20) und eine Stelldruckkammer (K) umfasst, die Stelldruckkammer (K) mit dem Arbeitsanschluss (A) des Steuerventils (30) verbunden ist, das Verstellorgan (20) in der Stelldruckkammer (K) in eine Stellrichtung seiner Bewegbarkeit mit dem Stellfluid beaufschlagbar ist, und die Verstelleinrichtung (20, 25, K) ferner eine Federeinrichtung (25) umfasst, die auf das Verstellorgan (20) eine dem Druck des Stellfluids entgegen wirkende Federkraft ausübt.

13. Pumpe nach einem der vorhergehenden Ansprüche, wobei
- die Pumpe (100) eine Rotationspumpe und das Förderglied (10) ein in der Förderkammer (5) um eine Rotationsachse (R₁₀) drehbarer Förderrotor (10) ist
- die Verstelleinrichtung (20, 25, K)
ein den Förderrotor (10) umgebendes oder an einer Stirnseite des Förderrotors (10) angeordnetes Verstellorgan (20), das für die Verstellung des Fördervolumens in dem Pumpengehäuse (1, 2) hin und her bewegbar ist,
und eine Stelldruckkammer (K) umfasst, die mit dem Arbeitsanschluss (A) des Steuerventils (30) verbunden ist,
- und das Verstellorgan (20) in der Stelldruckkammer (K) in eine Stellrichtung seiner Bewegbarkeit mit dem Stellfluid beaufschlagbar ist.

14. Pumpe nach einem der vorhergehenden Ansprüche, wobei die Pumpe in Abhängigkeit von der Geschwindigkeit eines von der Pumpe mit dem Fluid zu versorgenden Aggregats antreibbar ist, vorzugsweise in fester Drehzahlbeziehung zu und von dem Aggregat antreibbar ist.

15. Pumpe nach einem der vorhergehenden Ansprüche, wobei das Fluid ein Schmieröl und die Pumpe eine Schmierölpumpe in einem Schmierölförderkreis einer Brennkraftmaschine, vorzugsweise eines Antriebsmotors eines Kraftfahrzeugs, ist und der Versorgung der Brennkraftmaschine mit dem Schmieröl dient.

## Claims

1. A pump which exhibits an adjustable delivery volume, the pump comprising:
(a) a pump housing (1, 2), comprising: a pump port (3) for connecting the pump (100) to a reservoir (98) of a fluid to be delivered; a delivery chamber (5) which comprises a delivery chamber inlet (6) on a low-pressure side of the pump, and a delivery chamber outlet (7) on a high-pressure side of the pump, for a fluid; and a suction region (4) extending from the pump port (3) up to at least the delivery chamber inlet (6) on the low-pressure side;
(b) a delivery member (10) which can be moved within the delivery chamber (5) for delivering the fluid from the low-pressure side to the high-pressure side, preferably a delivery rotor (10) which can be rotated about a rotational axis (R₁₀) within the delivery chamber (5);
(c) an adjusting device (20, 25, K) for adjusting the delivery volume of the pump;
(d) a control valve (30), arranged outside the suction region (4), comprising:
(d1) a pressure port (P) for a setting fluid which is diverted from the fluid of the high-pressure side;
(d2) a working port (A) for the setting fluid, which is connected to the adjusting device (20);
(d3) a relief port (S) for the setting fluid;
(d4) a valve space (31), and a control piston (32) which can be moved back and forth within the valve space (31) between a first piston position and a second piston position;
(d5) and a tensing device (33) for generating a tensing force which acts on the control piston (32) in the direction of one of the piston positions;
(e) and an additional control device (36, 37, 40) for generating a control force which acts on the control piston (32), counter to the tensing force of the tensing device (33),
(f) wherein the control valve (30)
(f1) connects the working port (A) to the pressure port (P) when the control piston (32) is in the first piston position and
(f2) separates the working port (A) from the pressure port (P) and connects the working port (A) to the relief port (S) when the control piston (32) is in the second piston position,
**characterised in that**
(g) the relief port (S) is connected to the suction region (4) by bypassing the reservoir (98), and
(h) the control valve (30) is not in fluid communication with the reservoir via the relief port (S), such that no fluid flows from the reservoir into the valve space of the control valve via the relief port, and in particular no fluid flows from the control valve to the reservoir via the relief port.

2. The pump according to the preceding claim, wherein the relief port (S) is connected to the suction region (4) by means of a relief channel (35; 39), and the relief channel (35; 39) feeds into the suction region (4) at or downstream of the pump port (3).

3. The pump according to the preceding claim, wherein the control valve (30) is arranged in or on the pump housing (1, 2), and the relief channel (35; 39) extends from the relief port (S) up to and into the suction region (4) in and/or on the pump housing (1, 2).

4. The pump according to any one of the preceding claims, wherein: the pump housing (1, 2) comprises a housing structure (1), which surrounds the delivery chamber (5), and a housing cover (2) which is connected to the housing structure (1); the housing cover (2) together with the housing structure (1) forms a joining gap (1a, 2a) extending around the delivery chamber (5); and the relief port (S) is connected to the suction region (4) by means of a relief channel (35; 39) which extends in and/or on the housing cover (2) and/or in the joining gap (1a, 2a).

5. The pump according to any one of the preceding claims, wherein:
- the pump housing (1, 2) comprises a housing structure (1), which surrounds the delivery chamber (5), and a housing cover (2) which is connected to the housing structure (1);
- the housing cover (2) together with the housing structure (1) forms a joining gap (1a, 2a) extending around the delivery chamber (5);
- the valve space (31) of the control valve (30) extends in the movement direction of the control piston (32) up to and into or through the joining gap (1a, 2a); and
- the housing cover (2) seals the valve space (31).

6. The pump according to any one of the preceding claims, wherein the additional control device (36, 37, 40) can be connected to an external controller, preferably a controller of an assembly to be supplied with the fluid by the pump (100), and is configured to modulate the magnitude of the tensing force in accordance with control signals of the external controller.

7. The pump according to any one of the preceding claims, wherein the control valve (30) comprises: a control chamber (37) comprising an inlet (Y) for a control fluid for generating the control force by way of a control fluid pressure which acts on the control piston (32) within the control chamber (37); and a modulating valve (40), which is arranged in a flow path of the control fluid, for changing the control fluid pressure acting in the control chamber (37), wherein the control fluid is preferably diverted on the high-pressure side of the pump from the fluid delivered by the pump (100).

8. The pump according to any one of the preceding claims, wherein:
- the control piston (32) comprises a first piston surface and a second piston surface;
- the control valve (30) comprises
a first control chamber (36) comprising a first control port (X) for a control fluid for generating a first control force by way of a first control fluid pressure which acts on the first piston surface, counter to the tensing force, within the first control chamber (36) and
a second control chamber (37) comprising a second control port (Y) for a control fluid for generating a second control force by way of a second control fluid pressure which acts on the second piston surface, counter to the tensing force, within the second control chamber (37);
- and the additional control device (36, 37, 40) comprises a modulating valve (40) for changing the first control fluid pressure and/or the second control fluid pressure.

9. The pump according to the preceding claim, wherein the first control fluid and/or the second control fluid is diverted on the high-pressure side of the pump from the fluid delivered by the pump (100).

10. The pump according to any one of Claims 7 to 9, wherein the modulating valve (40) is embodied separately from the pump housing (1, 2) and is arranged separately from the pump housing (1, 2) in a delivery cycle of the pump (100).

11. The pump according to any one of Claims 7 to 10, wherein the control fluid is diverted on the high-pressure side at a point downstream of a filter for cleaning the fluid.

12. The pump according to any one of the preceding claims, wherein: the adjusting device (20, 25, K) comprises an adjusting member (20), which is assigned to the delivery member (10), and a setting pressure chamber (K); the setting pressure chamber (K) is connected to the working port (A) of the control valve (30); the setting fluid can be applied to the adjusting member (20) in the setting pressure chamber (K) in a setting direction in which it can move; and the adjusting device (20, 25, K) also comprises a spring device (25) which exerts a spring force, which acts counter to the pressure of the setting fluid, on the adjusting member (20).

13. The pump according to any one of the preceding claims, wherein:
- the pump (100) is a rotary pump, and the delivery member (10) is a delivery rotor (10) which can be rotated about a rotary axis (R₁₀) within the delivery chamber (5);
- the adjusting device (20, 25, K) comprises
an adjusting member (20) which surrounds the delivery rotor (10) or is arranged on an end-facing side of the delivery rotor (10) and can be moved back and forth within the pump housing (1, 2) for the purpose of adjusting the delivery volume
and a setting pressure chamber (K) which is connected to the working port (A) of the control valve (30);
- and the setting fluid can be applied to the adjusting member (20) in the setting pressure chamber (K) in a setting direction in which it can move.

14. The pump according to any one of the preceding claims, wherein the pump can be driven in accordance with the speed of an assembly to be supplied with the fluid by the pump and can preferably be driven by the assembly in a fixed rotational speed relationship to the assembly.

15. The pump according to any one of the preceding claims, wherein the fluid is a lubricating oil, and the pump is a lubricating oil pump in a lubricating oil delivery cycle of a combustion engine, preferably a drive motor of a motor vehicle, and is used to supply the combustion engine with the lubricating oil.

## Revendications

1. Pompe à volume de refoulement réglable, la pompe comprenant :
(a) un boîtier de pompe (1, 2) comportant un raccord de pompe (3) pour relier la pompe (100) à un réservoir (98) d'un fluide à refouler, une chambre de refoulement (5) comportant une entrée de chambre de refoulement (6) sur un côté basse pression de la pompe et une sortie de chambre de refoulement (7) sur un côté haute pression de la pompe pour un fluide, et une zone d'aspiration (4) s'étendant depuis le raccord de pompe (3) sur le côté basse pression au moins jusqu'à l'entrée de chambre de refoulement (6) ;
(b) un élément de refoulement (10) mobile dans la chambre de refoulement (5) pour refouler le fluide du côté basse pression vers le côté haute pression, de préférence un rotor de refoulement (10) rotatif autour d'un axe de rotation (R₁₀) dans la chambre de refoulement (5) ;
(c) un dispositif de réglage (20, 25, K) pour régler le volume de refoulement de la pompe ;
(d) une soupape de commande (30) disposée à l'extérieur de la zone d'aspiration (4), comprenant :
(d1) un raccord de pression (P) pour un fluide d'actionnement dérivé du fluide du côté haute pression ;
(d2) un raccord de travail (A) reliée au dispositif de réglage (20) pour le fluide d'actionnement ;
(d3) un raccord de décharge (S) pour le fluide d'actionnement ;
(d4) un espace de soupape (31) et un piston de commande (32) mobile en va-et-vient dans l'espace de soupape (31) entre une première position de piston et une seconde position de piston ;
(d5) et un dispositif de serrage (33) pour générer une force de serrage agissant sur le piston de commande (32) en direction de l'une des positions de piston ;
(e) et un dispositif de commande supplémentaire (36, 37, 40) pour générer une force de commande agissant sur le piston de commande (32) contre la force de serrage du dispositif de serrage (33),
(f) la soupape de commande (30)
(f1) reliant le raccord de travail (A) au raccord de pression (P) lorsque le piston de commande (32) est situé dans la première position de piston et
(f2) séparant le raccord de travail (A) du raccord de pression (P) et reliant le raccord de travail (A) au raccord de décharge (S) lorsque le piston de commande (32) est situé dans la seconde position de piston,
**caractérisée en ce que**
(g) le raccord de décharge (S) est relié à la zone d'aspiration (4) en contournant le réservoir (98) et
(h) la soupape de commande (30) n'est pas en communication fluidique avec le réservoir via le raccord de décharge (S), de sorte qu'aucun fluide ne s'écoule du réservoir dans l'espace de soupape de la soupape de commande, et en particulier de sorte qu'aucun fluide ne s'écoule de la soupape de commande vers le réservoir via le raccord de décharge.

2. Pompe selon la revendication précédente, dans laquelle le raccord de décharge (S) est relié à la zone d'aspiration (4) au moyen d'un canal de décharge (35 ; 39) et le canal de décharge (35 ; 39) débouche dans la zone d'aspiration (4) au raccord de pompe (3) ou en aval du raccord de pompe (3).

3. Pompe selon la revendication précédente, dans laquelle la soupape de commande (30) est disposée dans ou sur le boîtier de pompe (1, 2) et le canal de décharge (35 ; 39) s'étend depuis le raccord de décharge (S) jusqu'à l'intérieur de la zone d'aspiration (4) dans et / ou sur le boîtier de pompe (1, 2).

4. Pompe selon l'une quelconque des revendications précédentes, dans laquelle le boîtier de pompe (1, 2) comprend une structure de boîtier (1) entourant la chambre de refoulement (5) et un couvercle de boîtier (2) relié à la structure de boîtier (1), le couvercle de boîtier (2) forme avec la structure de boîtier (1) une fente de joint (1a, 2a) s'étendant autour de la chambre de refoulement (5), et le raccord de décharge (S) est relié à la zone d'aspiration (4) au moyen d'un canal de décharge (35 ; 39) qui s'étend dans et / ou sur le couvercle de boîtier (2) et / ou dans la fente de joint (1a, 2a).

5. Pompe selon l'une quelconque des revendications précédentes, dans laquelle
- le boîtier de pompe (1, 2) comprend une structure de boîtier (1) entourant la chambre de refoulement (5) et un couvercle de boîtier (2) relié à la structure de boîtier (1),
- le couvercle de boîtier (2) forme avec la structure de boîtier (1) une fente de joint (1a, 2a) s'étendant autour de la chambre de refoulement (5),
- l'espace de soupape (31) de la soupape de commande (30) s'étend en direction de mouvement du piston de commande (32) jusqu'à l'intérieur de la fente de joint (1a, 2a) ou à travers la fente de joint (1a, 2a) et
- le couvercle du boîtier (2) ferme l'espace de soupape (31).

6. Pompe selon l'une quelconque des revendications précédentes, dans laquelle ledit dispositif de commande supplémentaire (36, 37, 40) peut être relié à un élément de commande externe, de préférence un élément de commande d'un ensemble à alimenter en fluide par la pompe (100), et est adapté pour moduler l'amplitude de la force de serrage en fonction de signaux de commande de l'élément de commande externe.

7. Pompe selon l'une quelconque des revendications précédentes, dans laquelle la soupape de commande (30) comprend une chambre de commande (37) comportant une entrée (Y) pour un fluide de commande pour générer la force de commande par l'intermédiaire d'une pression de fluide de commande agissant sur le piston de commande (32) dans la chambre de commande (37) et une soupape de modulation (40) disposée dans un trajet d'écoulement du fluide de commande pour modifier la pression de fluide de commande agissant dans la chambre de commande (37), le fluide de commande étant de préférence dérivé du fluide refoulé par la pompe (100) sur le côté haute pression de la pompe.

8. Pompe selon l'une quelconque des revendications précédentes, dans laquelle
- le piston de commande (32) comporte une première surface de piston et une seconde surface de piston,
- la soupape de commande (30) comprend
une première chambre de commande (36) comportant un premier raccord de commande (X) pour un fluide de commande pour générer une première force de commande par l'intermédiaire d'une première pression de fluide de commande agissant sur la première surface de piston contre la force de serrage dans la première chambre de commande (36) et
une seconde chambre de commande (37) comportant un second raccord de commande (Y) pour un fluide de commande pour générer une seconde force de commande par l'intermédiaire d'une seconde pression de fluide de commande agissant sur la seconde surface de piston contre la force de serrage dans la seconde chambre de commande (37),
- et le dispositif de commande supplémentaire (36, 37, 40) comprend une soupape de modulation (40) pour modifier la première pression de fluide de commande et / ou la seconde pression de fluide de commande.

9. Pompe selon la revendication précédente, dans laquelle le premier fluide de commande et / ou le second fluide de commande est dérivé du fluide refoulé par la pompe (100) sur le côté haute pression de la pompe.

10. Pompe selon l'une quelconque des revendications 7 à 9, dans laquelle la soupape de modulation (40) est réalisée séparément du boîtier de pompe (1, 2) et est disposée dans un circuit de refoulement de la pompe (100) séparément du boîtier de pompe (1, 2).

11. Pompe selon l'une quelconque des revendications 7 à 10, dans laquelle le fluide de commande est dérivé sur le côté haute pression en aval d'un filtre pour nettoyer le fluide.

12. Pompe selon l'une quelconque des revendications précédentes, dans laquelle le dispositif de réglage (20, 25, K) comprend un organe de réglage (20) associé à l'élément de refoulement (10) et une chambre de pression d'actionnement (K), la chambre de pression d'actionnement (K) est reliée au raccord de travail (A) de la soupape de commande (30), l'organe de réglage (20) peut être sollicité par le fluide d'actionnement en direction d'actionnement de sa mobilité dans la chambre de pression d'actionnement (K), et le dispositif de réglage (20, 25, K) comprend en outre un dispositif de ressort (25) qui exerce sur l'organe de réglage (20) une force de ressort agissant contre la pression du fluide d'actionnement.

13. Pompe selon l'une quelconque des revendications précédentes, dans laquelle
- la pompe (100) est une pompe rotative et l'élément de refoulement (10) est un rotor de refoulement (10) rotatif autour d'un axe de rotation (R₁₀) dans la chambre de refoulement (5),
- le dispositif de réglage (20, 25, K) comprend
un organe de réglage (20) disposé sur une face frontale du rotor de refoulement (10) ou entourant le rotor de refoulement (10) et mobile en va-et-vient dans le boîtier de pompe (1, 2) pour régler le volume de refoulement,
et une chambre de pression d'actionnement (K) qui est reliée au raccord de travail (A) de la soupape de commande (30),
- et l'organe de réglage (20) peut être sollicité par le fluide d'actionnement en direction d'actionnement de sa mobilité dans la chambre de pression d'actionnement (K).

14. Pompe selon l'une quelconque des revendications précédentes, dans laquelle la pompe peut être entraînée en fonction de la vitesse d'un ensemble à alimenter en fluide par la pompe, de préférence par l'ensemble et par rapport de vitesse rotative fixe à l'ensemble.

15. Pompe selon l'une quelconque des revendications précédentes, dans laquelle le fluide est une huile lubrifiante et la pompe est une pompe à huile lubrifiante dans un circuit de refoulement d'huile lubrifiante d'un moteur à combustion interne, de préférence d'un moteur d'entraînement d'un véhicule automobile, et est utilisée pour alimenter le moteur à combustion interne en huile lubrifiante.
